# EUROPEAN PATENT APPLICATION

(11) **EP 4 851 205 A1**
(43) Date of publication of application: **09.12.2026**
(21) Application number: 24922022.9
(22) Date of filing: 13.12.2024
(51) Int. Cl.: C08G 14/073, C08J 5/24, C08L 61/34

(54) **BENZOXAZINE COMPOUND AND USE THEREOF**

(30) Priority: 29.01.2024 JP 2024011312
(71) Applicant: SHIKOKU CHEMICALS CORPORATION, Marugame-shi, Kagawa 763-8504 (JP); Forest Research and Management Organization, Tsukuba-shi Ibaraki 305-8687 (JP); Osaka Research Institute of Industrial Science and Technology, Izumi-shi, Osaka 594-1157 (JP)
(72) Inventor: OHASHI, Yasunori, Tsukuba-shi, Ibaraki 305-8687 (JP); YAMADA, Tatsuhiko, Tsukuba-shi, Ibaraki 305-8687 (JP); KIMURA, Hajime, Osaka-shi, Osaka 536-8553 (JP); YONEKAWA, Morio, Osaka-shi, Osaka 536-8553 (JP); SHIMOKAWAJI, Tomohiro, Osaka-shi, Osaka 536-8553 (JP); SHIOIRI, Ryosuke, Ayauta-gun, Kagawa 769-0202 (JP); ANDO, Syunsuke, Ayauta-gun, Kagawa 769-0202 (JP); AOKI, Kazunori, Ayauta-gun, Kagawa 769-0202 (JP); KUMANO, Takeshi, Ayauta-gun, Kagawa 769-0202 (JP)
(74) Representative: Müller-Boré & Partner Patentanwälte PartG mbB
(86) International application number: PCT/JP2024/044168
(87) International publication number: WO 2025/164104

(57) **Abstract**

This invention provides a benzoxazine compound obtained using polyethylene glycol-modified lignin as a raw material, a resin composition comprising the benzoxazine compound, and a cured resin product thereof. Specifically, this invention provides a benzoxazine compound that has a lignin skeleton, is soluble in organic solvents, and can be melted, and a method for producing the compound. The present invention relates to a resin composition comprising the benzoxazine compound and yielding a cured product having excellent heat resistance, high strength, and a low tensile elastic modulus, and a cured product thereof. This invention relates to a benzoxazine compound comprising a reaction product of a novolac-type phenolic resin derived from lignin modified with polyethylene glycol, an amine compound, and an aldehyde compound; a resin composition comprising the benzoxazine compound; a cured product of the resin composition; a composite (such as a prepreg) comprising the resin composition and a substrate; a cured product of the composite; and a method for producing the benzoxazine compound.

## Description

### Technical Field

The present invention relates to a benzoxazine compound and use of the compound.

### Background Art

Research on benzoxazine compounds has been conducted for a long time (for example, Patent Literature (PTL) 1), and these substances are synthesized by reacting a phenolic compound, an amine compound, and a formaldehyde compound (see Reaction Scheme (1)).

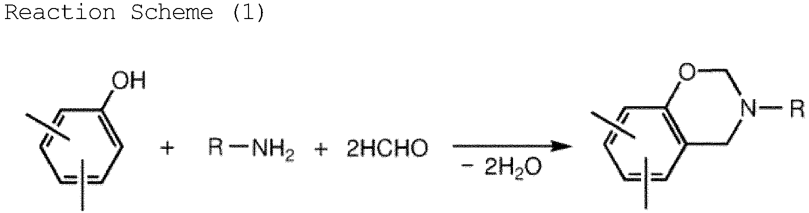

Benzoxazine compounds (monomers) undergo ring-opening polymerization (curing) upon heating to produce benzoxazine resins (polymers) and are thus attracting attention as a new type of phenolic resin that replaces conventional phenolic resins.

While benzoxazine resins have excellent mechanical properties, their hardness and brittleness pose challenges, limiting the applications in which they can be used. Moreover, although benzoxazine resins exhibit better heat resistance than epoxy resins and phenolic resins, their heat resistance is not sufficient for fields requiring stringent heat resistance, such as for power semiconductors and applications in vehicles.

On the other hand, as a new benzoxazine compound, a benzoxazine compound obtained using, as a raw material, lignin, which is a plant-derived component, has been reported (PTL 2).

In addition to the above lignin, lignin modified with polyethylene glycol (PEG) (PTL 3) and a novolac-type phenolic resin with excellent heat resistance and flexibility that is obtained using the PEG-modified lignin, a phenol, and an aldehyde as raw materials (PTL 4) have been reported.

### Citation List

### Patent Literature

PTL 1: JPS49-047378A
PTL 2: JP2013-053205A
PTL 3: JP2017-197517A
PTL 4: JP2021-123716A

### Summary of Invention

### Technical Problem

An object of the present invention is to provide a benzoxazine compound obtained using lignin modified with polyethylene glycol (sometimes referred to below as "PEG") as a raw material, a resin composition comprising the benzoxazine compound, and a cured resin product thereof.

Specifically, an object of the present invention is to provide a benzoxazine compound that has a lignin skeleton, is soluble in organic solvents, and can be melted, and a method for producing the benzoxazine compound. Another object is to provide a resin composition comprising the benzoxazine compound, the resin composition having excellent heat resistance and yielding a cured product having high strength and a low tensile elastic modulus, and a cured product thereof.

### Solution to Problem

The present inventors confirmed that the benzoxazine compound described in PTL 2, which is obtained using modified lignin as a raw material, has extremely low solubility in solvents and extremely low melt compatibility with resins, making it difficult to apply it to uses for forming prepregs and the like. The inventors conducted extensive research to solve this problem and found that a benzoxazine compound obtained using a novolac-type phenolic resin derived from PEG-modified lignin as a raw material exhibits excellent solubility in solvents and excellent melt compatibility with resins. The inventors also found that a cured product of a resin composition comprising the benzoxazine compound has higher heat resistance (higher glass transition temperature), as well as higher strength (higher tensile strength) and higher stretchability (lower tensile elastic modulus) than cured products of resin compositions comprising conventional benzoxazine compounds. The present invention has been accomplished through further research based on these findings.

Specifically, the present invention includes the following aspects.
[1] A benzoxazine compound comprising a reaction product of a novolac-type phenolic resin derived from lignin modified with polyethylene glycol, an amine compound, and an aldehyde compound.
[2] The benzoxazine compound according to Item [1], wherein the novolac-type phenolic resin is a novolac-type phenolic resin obtained by reacting lignin modified with polyethylene glycol, a phenolic resin, and an aldehyde compound.
[3] A resin composition comprising the benzoxazine compound of Item [1] or [2].
[4] A cured product of the resin composition of Item [3].
[5] A composite comprising the resin composition of Item [3] and a substrate.
[6] A prepreg comprising the resin composition of Item [3] and a substrate.
[7] A cured product of the composite of Item [5] or the prepreg of Item [6].
[8] A method for producing a benzoxazine compound, comprising the steps of:
   (1) reacting lignin modified with polyethylene glycol, a phenolic resin, and an aldehyde compound to obtain a novolac-type phenolic resin; and
   (2) reacting the novolac-type phenolic resin obtained in step (1), an amine compound, and an aldehyde compound to obtain a benzoxazine compound.

### Advantageous Effects of Invention

The benzoxazine compound having a lignin skeleton of the present invention has excellent solubility in organic solvents and can be melted. Since the benzoxazine compound can be melted, it can be melt-mixed with other resins. Thus, the benzoxazine compound can be suitably used for applications such as prepreg formation and casting processes.

A cured product obtained by curing a resin composition comprising the benzoxazine compound having a lignin skeleton of the present invention has excellent heat resistance (high glass transition temperature (Tg)) and excellent strength (high tensile strength), and is highly stretchable (relatively low tensile elastic modulus).

The curing reaction of the benzoxazine compound having a lignin skeleton of the present invention proceeds at a relatively low temperature.

### Brief Description of Drawings

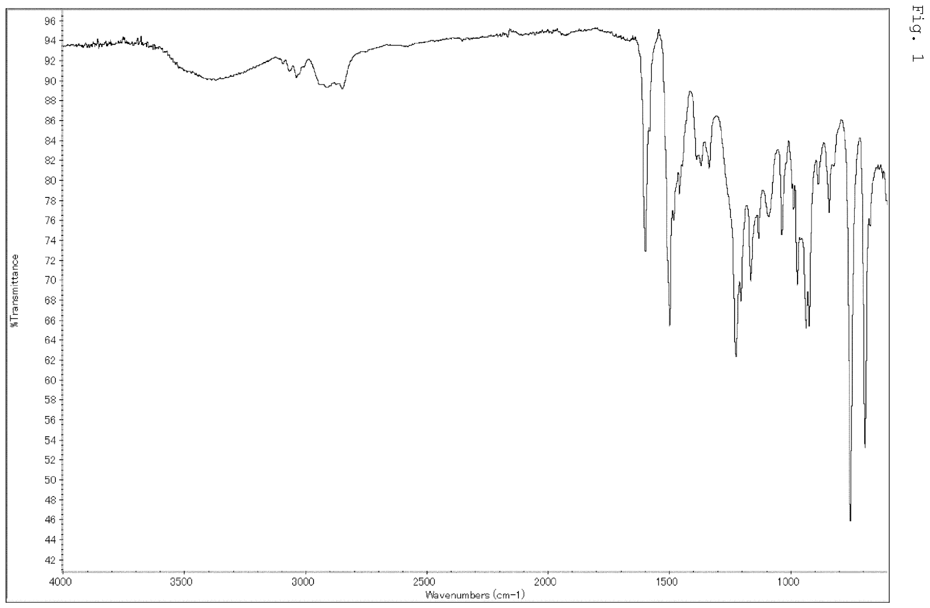

Fig. 1 is an IR spectral chart of the black solid obtained in Example 1.

### Description of Embodiments

### 1. Benzoxazine Compound

The benzoxazine compound of the present invention comprises a reaction product of (1) a novolac-type phenolic resin derived from lignin modified with polyethylene glycol (PEG), (2) an amine compound, and (3) an aldehyde compound.

### (1) Novolac-type Phenolic Resin Derived from Lignin Modified with PEG

The novolac-type phenolic resin derived from lignin modified with PEG comprises a reaction product obtained from lignin modified with PEG (sometimes referred to below as "PEG-modified lignin"), a phenolic compound, and an aldehyde compound. Typically, the novolac-type phenolic resin derived from lignin modified with PEG can be produced by reacting PEG-modified lignin, a phenolic compound, and an aldehyde compound in the presence of an acid catalyst. Specifically, the novolac-type phenolic resin derived from lignin modified with PEG can be produced according to or based on PTL 4 (JP2021-123716A). For example, this is as described below.

### PEG-modified Lignin

In the PEG-modified lignin, which is a raw material for the novolac-type phenolic resin derived from PEG-modified lignin, the polyethylene glycol (PEG) is appropriately selected according to the physical properties etc. required for the benzoxazine compound of the present invention.

From the viewpoint of achieving both high tensile strength and low tensile elastic modulus in the benzoxazine compound of the present invention, the number average molecular weight of the polyethylene glycol is, for example, 100 or more, preferably 200 or more, more preferably 300 or more, and even more preferably 400 or more, and is, for example, 1000 or less, preferably 900 or less, more preferably 800 or less, and even more preferably 600 or less. The number average molecular weight can be determined as molecular weight in terms of polyethylene glycol as measured by a known gel permeation chromatography method.

In the PEG-modified lignin, the lignin is a high-molecular-weight phenolic compound comprising one or more of the following basic skeletons: a guaiacyl lignin (G-type) basic skeleton, a syringyl lignin (S-type) basic skeleton, a p-hydroxyphenyl lignin (H-type) basic skeleton, and the like, and is contained in plants in general as a natural product (natural lignin).

Examples of known industrially extracted natural lignin include soda lignin, sulfite lignin, kraft lignin, and the like, which are contained in waste liquids (black liquors) discharged when pulp is produced from a plant material (lignocellulose) as a raw material by processes such as a soda process, a sulfite process, and a kraft process.

Specific examples of lignin include lignin derived from woody plants, lignin derived from herbaceous plants, and the like. Examples of lignin derived from woody plants include softwood lignin contained in softwood (e.g., Japanese cedar), hardwood lignin contained in hardwood, and the like. Lignin derived from woody plants does not contain an H-type basic skeleton. More specifically, among lignins derived from woody plants, softwood lignin does not contain an S-type basic skeleton and has a G-type basic skeleton. Hardwood lignin has a G-type basic skeleton and an S-type basic skeleton.

Examples of lignin derived from herbaceous plants include gramineous lignin contained in plants of the family Gramineae (e.g., wheat straw, rice straw, maize, and bamboo) and the like. Lignin derived from herbaceous plants has all of H-type, G-type, and S-type basic skeletons. These lignins may be used singly or in a combination of two or more.

From the viewpoint of the homogeneity of the PEG-modified lignin, the lignin is preferably, for example, woody plant-derived lignin that does not contain an H-type basic skeleton, more preferably, for example, softwood lignin that does not contain an S-type basic skeleton and has a G-type basic skeleton, and particularly preferably, for example, softwood lignin derived from Japanese cedar.

The PEG-modified lignin is not particularly limited, and can be produced, for example, in accordance with the method described in PTL 3 (JP2017-197517A).

More preferably, for example, the PEG-modified lignin can be obtained by subjecting a plant material (lignocellulose) that serves as a raw material for lignin to solvolysis using polyethylene glycol.

The solvolysis method is not particularly limited, and for example, a plant material that serves as a raw material for lignin, polyethylene glycol, and an inorganic acid (e.g., hydrochloric acid or sulfuric acid) as an acid catalyst are mixed and reacted.

The proportion of the polyethylene glycol is, for example, 200 parts by mass or more, and preferably 300 parts by mass or more, and is, for example, 1000 parts by mass or less, and preferably 600 parts by mass or less, per 100 parts by mass of the plant material that serves as a raw material for lignin.

The proportion of the inorganic acid (on a 100% basis) is, for example, 0.1 parts by mass or more, and preferably 0.2 parts by mass or more, and is, for example, 2 parts by mass or less, and preferably 1 part by mass or less, per 100 parts by mass of the polyethylene glycol.

The reaction conditions are as follows: under ordinary pressure, the reaction temperature is, for example, 120°C or higher, and preferably 130°C or higher, and is, for example, 180°C or lower, and preferably 150°C or lower; the reaction time is, for example, 60 minutes or more and is, for example, 240 minutes or less, and preferably 120 minutes or less.

After completion of the reaction, a known alkali (e.g., ammonia or sodium hydroxide) is added in an appropriate proportion to adjust the pH, thereby extracting PEG-modified lignin into the solution.

The pH after adjustment is, for example, 8 or more, preferably 10 or more, and more preferably 10.5 or more, and is, for example, 14 or less.

By this method, pulp is obtained as a solid component, and PEG-modified lignin is obtained as a solution component (pulp waste liquid).

Subsequently, in this method, the solid component (pulp) is separated from the reaction product by a known separation method, such as filtration, pressing, or centrifugation, and the solution component (pulp waste liquid) is collected.

In addition, in this method, if necessary, the solid component (pulp) may be washed to collect the solution (PEG-modified lignin) with which the solid component is impregnated.

Thereafter, in this method, an inorganic acid (e.g., hydrochloric acid or sulfuric acid) or the like is added to adjust the pH, thereby allowing the PEG-modified lignin to deposit and precipitate.

The pH after adjustment is, for example, 1.5 or more, and is, for example, 5 or less, preferably 3 or less, and more preferably 2 or less.

This allows the PEG-modified lignin to precipitate. Furthermore, the obtained precipitate may be collected, for example, by a known method, such as filtration, pressing, or centrifugation, to obtain the PEG-modified lignin as a solid.

### Phenolic Compound

Examples of phenolic compounds that can be used as a raw material for the novolac-type phenolic resin derived from PEG-modified lignin include phenol and derivatives thereof (modified forms of phenol). Specific examples include phenol, bifunctional phenol derivatives, such as o-cresol, p-cresol, p-tert-butylphenol, p-phenylphenol, p-cumylphenol, p-nonylphenol, and 2,4- or 2,6-xylenol, trifunctional phenol derivatives, such as m-cresol, resorcinol, and 3,5-xylenol, tetrafunctional phenol derivatives, such as bisphenol A and dihydroxydiphenylmethane, and the like.

Examples of phenol derivatives include halogenated phenolic compounds substituted with halogens, such as chlorine and bromine, and the like. These phenolic compounds may be used singly or in a combination of two or more. When a phenol derivative (a modified form of phenol) is used, the timing at which the phenol is modified is not particularly limited and may be before, after, or simultaneous with the reaction of the PEG-modified lignin, the phenolic compound, and the aldehyde compound.

The phenolic compound is preferably, for example, phenol.

### Aldehyde Compound

Examples of aldehyde compounds that can be used as a raw material for the novolac-type phenolic resin derived from PEG-modified lignin include formaldehyde, paraformaldehyde, acetaldehyde, propionaldehyde, butyraldehyde (n-butyraldehyde and isobutyraldehyde), furfural, glyoxal, benzaldehyde, trioxane, tetraoxane, and the like. In addition, a portion of the aldehyde may be replaced by furfuryl alcohol or the like. These aldehyde compounds may be used singly or in a combination of two or more.

Preferred examples of aldehyde compounds include formaldehyde and paraformaldehyde. The aldehyde compound may be used, for example, in the form of an aqueous solution. In such a case, the concentration of the aldehyde compound is, for example, 10 mass% or more, and preferably 20 mass% or more, and is, for example, 99 mass% or less, and preferably 95 mass% or less.

In addition to the aldehyde compound, a ketone compound may also be added. Examples of ketone compounds include acetone, methyl ethyl ketone, diethyl ketone, acetophenone, diphenyl ketone, and the like. These ketone compounds may be used singly or in a combination of two or more.

When a ketone compound is mixed, the proportion of the ketone compound is, on a solids basis, for example, 0.01 parts by mass or more, and preferably 1 part by mass or more, and is, for example, 200 parts by mass or less, and preferably 100 parts by mass or less, per 100 parts by mass of the aldehyde compound.

### Reaction

To react the PEG-modified lignin, the phenolic compound, and the aldehyde compound (and the ketone compound added as necessary; the same applies below), the above components (PEG-modified lignin, phenolic compound, aldehyde compound, etc.) are mixed and heated. In this reaction, an acid catalyst may also be added.

In this reaction, the proportion of the phenolic compound is, for example, 30 parts by mass or more, preferably 50 parts by mass or more, and more preferably 100 parts by mass or more, and is, for example, 1000 parts by mass or less, preferably 500 parts by mass or less, and more preferably 350 parts by mass or less, per 100 parts by mass of the PEG-modified lignin.

From the viewpoint of improving heat resistance, the proportion of the phenolic compound is preferably 200 parts by mass or more, and more preferably 250 parts by mass or more, and is preferably 1000 parts by mass or less, and more preferably 500 parts by mass or less, per 100 parts by mass of the PEG-modified lignin.

The proportion of the aldehyde compound is, for example, 5 parts by mass or more, and preferably 10 parts by mass or more, and is, for example, 35 parts by mass or less, and preferably 30 parts by mass or less, per 100 parts by mass of the phenolic compound.

The proportion of the aldehyde compound is, for example, 1.5 parts by mass or more, and preferably 3 parts by mass or more, and is, for example, 350 parts by mass or less, and preferably 300 parts by mass or less, per 100 parts by mass of the PEG-modified lignin.

In this reaction, an acid catalyst may be added. The above components may be reacted in the presence of an acid catalyst. Examples of acid catalysts include organic acids, inorganic acids, and the like.

Examples of organic acids include sulfonic acid compounds, such as methanesulfonic acid, p-toluenesulfonic acid, dodecylbenzenesulfonic acid, cumenesulfonic acid, dinonylnaphthalene monosulfonic acid, and dinonylnaphthalene disulfonic acid; phosphoric acid esters having a C₁₋₁₈ alkyl group, such as trimethyl phosphate, triethyl phosphate, monobutyl phosphate, dibutyl phosphate, tributyl phosphate, and trioctyl phosphate; formic acid; acetic acid; oxalic acid; and the like. Examples of inorganic acids include phosphoric acid, hydrochloric acid, sulfuric acid, nitric acid, and the like. These acid catalysts may be used singly or in a combination of two or more.

The acid catalyst is, for example, preferably an organic acid, and more preferably oxalic acid.

The proportion of the acid catalyst is, for example, 0.1 parts by mass or more, and preferably 0.3 parts by mass or more, and is, for example, 10 parts by mass or less, and preferably 5 parts by mass or less, per 100 parts by mass of the phenolic compound.

When the acid catalyst is added is not particularly limited. The acid catalyst may be added in advance to at least one of the PEG-modified lignin, the phenolic compound, and the aldehyde compound, may be added simultaneously when the PEG-modified lignin, the phenolic compound, and the aldehyde compound are mixed, or may be added after the PEG-modified lignin, the phenolic compound, and the aldehyde compound are mixed.

The reaction conditions are as follows: under atmospheric pressure, the reaction temperature is, for example, 50°C or higher, and preferably 80°C or higher, and is, for example, 200°C or lower, and preferably 180°C or lower; the reaction time is, for example, 1 hour or more, and preferably 2 hours or more, and is, for example, 20 hours or less, and preferably 15 hours or less.

Accordingly, a novolac-type phenolic resin is obtained as a reaction product of the PEG-modified lignin, the phenolic compound, and the aldehyde compound. More specifically, a novolac-type phenolic resin is obtained by the reaction of the phenolic compound and the aldehyde compound in the presence of the acid catalyst, and the novolac-type phenolic resin is modified with the PEG-modified lignin.

That is, a novolac-type phenolic resin derived from PEG-modified lignin is obtained.

In the production of the novolac-type phenolic resin derived from PEG-modified lignin, unreacted raw materials (such as the unreacted phenolic compound) and the acid catalyst can be removed by a known method, such as distillation, if necessary.

The thus-obtained novolac-type phenolic resin derived from PEG-modified lignin contains a reaction product obtained by reacting lignin modified with polyethylene glycol, a phenolic compound, and an aldehyde compound in the presence of an acid catalyst.

### (2) Amine Compound

Examples of amine compounds include primary amines. Specific examples include alkylmonoamines and alkenylmonoamines, such as methylamine, ethylamine, n-propylamine, n-butylamine, n-dodecylamine, n-nonylamine, cyclopentylamine, cyclohexylamine, and allylamine; aromatic monoamine, such as aniline, p-cyanoaniline, p-bromoaniline, o-toluidine, m-toluidine, p-toluidine, 2,4-xylidine, 2,5-xylidine, 3,4-xylidine, α-naphthylamine, β-naphthylamine, and 3-aminophenylacetylene; and the like.

Furthermore, benzylamine, 2-aminobenzylamine, 1,3-diaminopropane, 1,4-diaminobutane, 1,10-diaminodecane, 2,7-diaminofluorene, 1,4-diaminocyclohexane, 9,10-diaminophenanthrene, 1,4-diaminopiperazine, p-phenylenediamine, 4,4'-diaminobenzophenone, 4,4'-diaminodiphenylsulfone, 4,4'-diaminodiphenylmethane, 4,4'-diaminobiphenyl, 4,4'-oxydianiline, fluorenetetraamine, tetraaminediphenylether, melamine, and the like can also be used.

Among these, aniline, methylamine, and the like are preferable, and aniline is more preferable. Aniline has a phenyl group per molecule, and the phenyl group further improves the heat resistance of the molded article.

### (3) Aldehyde Compound

The aldehyde compound is not particularly limited. Examples include formaldehyde, paraformaldehyde, acetaldehyde, propionaldehyde, butyraldehyde (n-butyraldehyde and isobutyraldehyde), furfural, glyoxal, benzaldehyde, trioxane, tetraoxane, and the like. In addition, a portion of the aldehyde may be replaced by furfuryl alcohol or the like. These aldehyde compounds may be used singly or in a combination of two or more.

Preferred are, for example, formaldehyde compounds. Examples of formaldehyde compounds include formalin, which is an aqueous solution of formaldehyde, and its polymers, such as paraformaldehyde and trioxane. The state of the aldehyde compound used is not limited, and may be solid, liquid, or the like. In particular, paraformaldehyde is preferred because it is a solid (powder) at room temperature and is thus easy to handle.

### (4) Production Method

The benzoxazine compound of the present invention can be produced by reacting components comprising (1) a novolac-type phenolic resin derived from PEG-modified lignin, (2) an amine compound, and (3) an aldehyde compound.

A benzoxazine ring is formed on the phenolic skeleton portion in the molecule of the novolac-type phenolic resin derived from PEG-modified lignin. For example, by mixing and reacting the above components, a cyclization reaction proceeds on the phenolic skeleton portion to form a benzoxazine ring.

The novolac-type phenolic resin derived from PEG-modified lignin, the amine compound, and the aldehyde compound may be used in a molar ratio that is theoretically required to form a benzoxazine ring. For example, when each component contains one functional group per molecule, the molar ratio of the novolac-type phenolic resin derived from PEG-modified lignin, the amine compound, and the aldehyde compound is 1:1:2.

The amine compound and the aldehyde compound may be used in appropriate proportions depending on the degree to which the novolac-type phenolic resin derived from PEG-modified lignin is modified. For example, per 1 mol of phenolic hydroxyl groups of the novolac-type phenolic resin derived from PEG-modified lignin, the amine compound is used in an amount of 0.5 to 30 mol, preferably 0.8 to 20 mol, and more preferably 1 to 10 mol, and the aldehyde compound is used in an amount of 1 to 40 mol, preferably 1.2 to 20 mol, and more preferably 1.5 to 15 mol.

In this reaction, an acid catalyst may be added. That is, the above components may be reacted in the presence of an acid catalyst. Examples of acid catalysts include organic acids, inorganic acids, and the like.

Examples of organic acids include sulfonic acid compounds, such as methanesulfonic acid, p-toluenesulfonic acid, dodecylbenzenesulfonic acid, cumenesulfonic acid, dinonylnaphthalene monosulfonic acid, and dinonylnaphthalene disulfonic acid; phosphoric acid esters having a C₁₋₁₈ alkyl group, such as trimethyl phosphate, triethyl phosphate, monobutyl phosphate, dibutyl phosphate, tributyl phosphate, and trioctyl phosphate; formic acid; acetic acid; oxalic acid; and the like. Examples of inorganic acids include phosphoric acid, hydrochloric acid, sulfuric acid, nitric acid, and the like. These acid catalysts may be used singly or in a combination of two or more.

The acid catalyst is, for example, preferably an organic acid, and more preferably oxalic acid.

The proportion of the acid catalyst is, for example, 0.1 parts by mass or more, and preferably 0.3 parts by mass or more, and is, for example, 10 parts by mass or less, and preferably 5 parts by mass or less, per 100 parts by mass of the phenolic compound.

The reaction temperature is preferably about 50 to 200°C, and more preferably about 100 to 150°C. The reaction time is preferably about 5 minutes to 6 hours, and more preferably about 20 minutes to 3 hours.

The benzoxazine compound produced as described above has superior solubility in solvents and superior melting properties compared with benzoxazine compounds obtained using herbaceous lignin. Moreover, the benzoxazine compound cures faster than conventional benzoxazine compounds, and its cured product is excellent in heat resistance, strength, and flexibility.

### 3. Use of Benzoxazine Compound

The present invention further provides a resin composition comprising the benzoxazine compound produced as described above, a cured product of the resin composition, a composite (such as a prepreg) comprising the resin composition and a substrate, and a cured product of the composite. These are described in detail below.

The resin composition of the present invention comprises the benzoxazine compound described above and may further comprise, as necessary, one or more additives, such as toughening agents, catalysts, reinforcing agents, fillers, adhesion promoters, flame retardants, and thixotropic agents. The additives may be used singly or in a combination of two or more. The content of the additives can be appropriately set according to the purpose and use within a range that does not impair the excellent effects of the present invention.

The resin composition of the present invention may comprise one or more other resins as necessary. Examples of other resins include thermosetting resins, thermoplastic resins, and the like. Examples of thermosetting resins include epoxy-based resins, phenolic resins, bismaleimide resins, polyimide resins, silicone resins, melamine resins, urea resins, unsaturated polyester resins, alkyd resins, furan resins, polyurethane resins, and the like. Examples of thermoplastic resins include thermoplastic epoxy resins, thermoplastic polyimide resins, and the like.

The resin composition of the present invention comprises the benzoxazine compound as a main component and may comprise one or more other resins (thermosetting resins, thermoplastic resins, etc.), additives, and the like as secondary components as necessary.

In the present invention, the term "resin composition comprising the benzoxazine compound" encompasses both the benzoxazine compound itself and a mixture of the benzoxazine compound and one or more other components (additives, other resins, etc.).

The content of the benzoxazine compound in the resin composition of the present invention is, for example, 1 to 100 mass%, preferably 1 to 90 mass%, more preferably 3 to 85 mass%, and particularly preferably 5 to 80 mass%.

The minimum melt viscosities (complex viscosities) of the benzoxazine compound and resin composition of the present invention are each preferably 0.1 to 10000 (Pa·s), more preferably 0.1 to 1000 (Pa·s), and particularly preferably 1 to 500 (Pa·s) at 100 to 160°C, from the viewpoint of being able to be kneaded with other resins.

In the present specification, the minimum melt viscosities (complex viscosities) are determined by the following method. Specifically, viscoelasticity is measured using a 25 mm diameter parallel plate rheometer (MCR300, produced by Anton Paar Japan K.K) under the conditions of a 1 mm gap, a frequency of 1 Hz, a strain of 0.5%, a heating rate of 2°C/min, and a temperature range of 100°C to 180°C, and the minimum melt viscosity (Pa·s) is determined from the resulting viscoelasticity curve.

When the resin composition of the present invention comprises one or more additives and/or one or more other resins, the benzoxazine compound, and the additives and/or other resins may be mixed (kneaded) by a known method.

The kneading method is not particularly limited, and for example, known kneaders, such as a single-screw extruder, a multi-screw extruder, a roll kneader, a kneader, a Henschel mixer, and a Banbury mixer, can be used. The kneading conditions are as follows: the kneading temperature is, for example, 80°C or higher, preferably 90°C or higher, and more preferably 100°C or higher, and is 180°C or lower, preferably 170°C or lower, and more preferably 160°C or lower; the kneading time is, for example, 3 minutes or more, and preferably 5 minutes or more, and is, for example, 30 minutes or less, and preferably 20 minutes or less. Thus, a resin composition comprising the benzoxazine compound, and one or more additives and/or one or more other resins is obtained.

The cured product of the resin composition of the present invention can be obtained by curing the resin composition. The curing of the resin composition may be carried out, for example, under conditions of 100 to 200°C for 1 minute to 8 hours.

The glass transition temperature of the resulting cured product is preferably at least 200°C, more preferably at least 215°C, and particularly preferably at least 230°C. In the present specification, the glass transition temperature (Tg) is a value measured from the peak temperature of loss tangent (tanδ) obtained from a dynamic viscoelasticity test.

The present invention provides a composite comprising the resin composition of the present invention and a substrate. Typical examples of the composite include a prepreg comprising the resin composition and a substrate, and the like. The prepreg of the present invention is typically a composite in which a substrate is impregnated with the resin composition. The substrate is not particularly limited as long as it can form a prepreg, and examples include paper, reinforcing fibers, and the like.

Examples of paper include linter paper obtained using cotton as a raw material, kraft paper obtained using hardwood as a raw material, and the like.

Examples of reinforcing fibers include glass fibers, carbon fibers, graphite fibers, aramid fibers, boron fibers, alumina fibers, silicon carbide fibers, and the like. A wide range of fibers, not limited to these, can be used. There are no particular restrictions or limitations regarding the form of reinforcing fibers, and, for example, fibers in various forms, including long fibers (stretched in one direction), tow, fabrics, mats, knits, braids, and short fibers (cut to a length of less than 10 mm), can be used. The term "long fiber" means a single fiber or fiber bundle that is substantially continuous for at least 10 mm. The term "short fiber" means a fiber bundle cut to a length of less than 10 mm. For applications requiring high specific strength and specific modulus, a fiber arrangement in which reinforcing fiber bundles are aligned in the same direction is suitable.

The content of the resin composition in the prepreg is typically 30 to 70 mass%, preferably 35 to 65 mass%, and more preferably 40 to 60 mass%. The content of the substrate in the prepreg is typically 30 to 70 mass%, preferably 35 to 65 mass%, and more preferably 40 to 60 mass%.

The prepreg can be produced using a known method. When the substrate is reinforcing fibers, for example, a sheet molding compound method and the like can be used.

The prepreg can be produced by impregnating a substrate (such as paper or reinforcing fibers) with the resin composition. The impregnation method includes a wet method and a hot-melt method (dry method). In this case, the viscosity of the resin composition with which the substrate is to be impregnated is preferably within the above range.

The wet method is a method in which a prepreg is prepared by immersing a substrate (such as paper or reinforcing fibers) in a solution of the resin composition in an organic solvent (such as methyl ethyl ketone, tetrahydrofuran, or methanol), taking the substrate out, and then removing the organic solvent by evaporation using an oven or the like.

The hot-melt method is, for example, a method in which a substrate (such as paper or reinforcing fibers) is directly impregnated with the resin composition that has been made fluid in advance by heating, or a method in which release paper or the like is coated with the resin composition for use as a resin film, and then the film is placed on one or both sides of a substrate (such as paper or reinforcing fibers) arranged in a flat shape, followed by applying heat and pressure to impregnate the substrate with the resin. The hot-melt method enables a prepreg substantially free of residual solvent to be obtained.

For the application of heat and pressure under a prepreg lamination molding method, a press molding method, an autoclave molding method, a bagging molding method, a wrapping tape method, an internal pressure molding method, or the like may be used as appropriate.

Autoclave molding is a method in which prepregs are laminated on a tool plate having a predetermined shape, then covered with a bagging film, and subsequently cured by applying heat and pressure while air is evacuated from the laminate. This method allows precise control of fiber orientation and can also provide high-quality molded materials with excellent mechanical properties by minimizing the void content.

The pressure applied during the molding process is typically 0.3 to 1.0 MPa, and the molding temperature is typically within the range of 90 to 300°C.

Since the cured product of the resin composition comprising the benzoxazine compound of the present invention has a high Tg, it is advantageous to cure the prepregs at a relatively high temperature (e.g., a temperature of at least 180°C or at least 200°C). For example, the molding temperature may be 200 to 275°C. Alternatively, the prepregs may be molded at a slightly lower temperature (e.g., 90 to 200°C), demolded, and then post-cured at a higher temperature (e.g., 200 to 275°C) after being removed from the mold.

The wrapping tape method is a method in which prepregs are wrapped around a mandrel or some other core bar to form a tubular fiber-reinforced composite material. This method can be used for producing golf shafts, fishing rods, and other rod-shaped products. More specifically, this method involves wrapping prepregs around a mandrel and wrapping a wrapping tape made of a thermoplastic film over the prepregs under tension in order to secure the prepregs and apply pressure to them. After curing of the resin by heating in an oven, the mandrel is removed to obtain a tubular body. The tension used for wrapping the wrapping tape may be 20 to 100 N. The molding temperature may be within the range of 80 to 300°C.

The internal pressure molding method is a method in which a preform obtained by wrapping prepregs around a thermoplastic resin tube or some other internal pressure applicator is set inside a metal mold, then a high-pressure gas is introduced into the internal pressure applicator to apply pressure, and simultaneously with this, the metal mold is heated to form prepregs. This method can be used when molding objects with complex shapes, such as golf shafts, bats, and tennis or badminton rackets. The pressure applied during the molding process may be 0.1 to 2.0 MPa. The molding temperature may be within the range of room temperature to 300°C, or 180 to 275°C.

The cured product of the resin composition of the present invention and the cured product of the composite (such as a prepreg) of the present invention obtained in this manner are produced using, as a raw material, the benzoxazine compound described above, which comprises a reaction product of (1) a novolac-type phenolic resin derived from lignin modified with PEG, (2) an amine compound, and (3) an aldehyde compound, and therefore have excellent heat resistance (high glass transition temperature (Tg)), excellent strength (high tensile strength), and high stretchability (relatively low tensile elastic modulus). Therefore, they are suitably used for a wide range of applications, such as the production of molded articles, including electrical components, automobile parts, building materials, daily necessities, fiber-reinforced composite materials, structural materials, electrical/electronic materials, and the like.

### Examples

The present invention is described in more detail below with reference to Examples and Comparative Examples. However, the present invention is not limited thereto.

### Raw Materials

The main raw materials used are as follows.
- Modified lignin novolac resin 1 (PEG600LN-2; novolac-type phenolic resin derived from lignin modified with polyethylene glycol; modified lignin content: 40%; produced by Forestry and Forest Products Research Institute) (refer to Example 7 of PTL 4)
- Modified lignin novolac resin 2 (PEG400LN-2; novolac-type phenolic resin derived from lignin modified with polyethylene glycol; modified lignin content: 40%; produced by Forestry and Forest Products Research Institute) (refer to Example 4 of PTL 4)
- Phenol novolac resin N1 (Phenolite TD2131; mp: 80°C; OH equivalent weight: 103; produced by DIC Corporation)

### Evaluation Method

The benzoxazine compounds, prepregs, and cured products obtained below were evaluated as follows.

### (1) Softening Points and Minimum Melt Viscosities of Benzoxazine Compounds

The endothermic peak temperatures of the benzoxazine compounds obtained in Examples 1 and 2 and the benzoxazine compound obtained in Comparative Example 3 were measured by differential scanning calorimetry (DSC) and defined as the softening points (°C). Table 1 shows the results.

The viscoelasticity of each benzoxazine compound was also measured using a 25 mm diameter parallel plate rheometer (MCR300, produced by Anton Paar Japan K.K) under the conditions of a 1 mm gap, a frequency of 1 Hz, a strain of 0.5%, a heating rate of 2°C/min, and a temperature range of 100°C to 180°C, and the minimum melt viscosity (Pa·s) was determined from the resulting viscoelasticity curve. Table 1 shows the results.

### (2) Solubility Test of Benzoxazine Compounds

The solubility of the benzoxazine compounds obtained in Examples 1 and 2 and the benzoxazine compound obtained in Comparative Example 3 in the various solvents shown in Table 2 was evaluated. Specifically, 5 g of each solvent was individually added to 1 g of each benzoxazine compound, and the benzoxazine compound was dissolved at room temperature (23°C). Thereafter, the obtained mixture was filtered, and the presence or absence of an undissolved residue was visually examined. The solubility of each benzoxazine compound in the solvents was evaluated according to the following criteria. Table 2 shows the results.
∘: Completely dissolved (no residue)
△: Partially dissolved (some residue remaining)
×: Not dissolved at all

### (3) Evaluation of Curing Behavior of Benzoxazine Compounds

The curing behavior was evaluated using differential scanning calorimetry (DSC) by heating each benzoxazine compound from room temperature to 300°C at a heating rate of 10°C/min under a nitrogen atmosphere, and measuring the onset temperature and peak temperature of the cure exotherm peak of each benzoxazine compound. Table 3 shows the results.

### (4) Evaluation of Heat Resistance of Cured Products (Measurement of Glass Transition Temperature Tg)

The glass transition temperatures (Tg) of the cured products obtained in Examples 3 and 4 and the cured products obtained in Comparative Examples 4 and 5 were evaluated based on the peak temperatures of the temperature dispersion curves of the loss tangent (tanδ) obtained from the results of dynamic viscoelasticity measurement. The dynamic viscoelasticity measurement was performed using a Rheogel-E4000 produced by UBM at a frequency of 1 Hz and a heating rate of 2°C/min, and in bending mode. Table 3 shows the results.

### (5) Evaluation of Tensile Strength and Elastic Modulus of Cured Products

Using strip-shaped test pieces (length: 100 mm, width: 10 mm, thickness: about 5 mm) as the cured products obtained in Examples 3 and 4 and the cured products obtained in Comparative Examples 4 and 5, a tensile test was performed at a test speed of 1 mm/min and a grip-to-grip distance of 70 mm at room temperature to measure the tensile strength (MPa) and the tensile elastic modulus (GPa). Table 3 shows the results.

### Synthesis of Benzoxazine Compounds

### Example 1

15.0 g of modified lignin novolac resin 1 (phenolic hydroxyl groups of the resin: 97.5 mmol), 150 g of 4-methyltetrahydropyran, 9.1 g of aniline (97.5 mmol), and 5.9 g of paraformaldehyde (195 mmol) were placed in a 300 ml three-necked recovery flask and stirred at 106°C for 3 hours while removing water from the system using a Dean-Stark apparatus. The mixture was then cooled to 80°C, the insoluble matter was filtered off, and the filtrate was concentrated to obtain 15.1 g of a black solid.

The ¹H-NMR spectral data of the black solid were as follows.
- ¹H-NMR(DMSO-d₆)δ/ppm: 6.4-7.2 ppm (benzene ring derived from novolac resin skeleton), 4.5-4.6 ppm (benzoxazine ring methylene), 5.3 ppm (benzoxazine ring methylene), 3.5-3.6 ppm (methylene derived from novolac resin skeleton), 3.5 ppm (methylene derived from polyethylene glycol)

The IR spectral data of the black solid were as shown in the chart in Fig. 1. From the spectral data, the obtained black solid was identified as a benzoxazine compound.

The softening point, minimum melt viscosity, and solubility of the obtained benzoxazine compound were evaluated. Tables 1 and 2 show the results.

### Example 2

15.0 g of modified lignin novolac resin 2 (phenolic hydroxyl groups of the resin: 97.5 mmol), 150 g of 4-methyltetrahydropyran, 9.1 g of aniline (97.5 mmol), and 5.9 g of paraformaldehyde (195 mmol) were placed in a 300 ml three-necked recovery flask and stirred at 106°C for 3 hours while removing water from the system using a Dean-Stark apparatus. The mixture was then cooled to 80°C, the insoluble matter was filtered off, and the filtrate was concentrated to obtain 15.1 g of a black solid.

The ¹H-NMR spectral data of the black solid were as follows.
- ¹H-NMR(DMSO-d₆)δ/ppm: 6.6-7.2 ppm (benzene ring derived from novolac resin skeleton), 4.3-4.6 ppm (benzoxazine ring methylene), 5.3 ppm (benzoxazine ring methylene), 3.2-3.7 ppm (methylene derived from novolac resin skeleton), 3.5 ppm (methylene derived from polyethylene glycol)

From the IR spectral data of the black solid, the obtained black solid was identified as a benzoxazine compound.

The softening point, minimum melt viscosity, and solubility of the obtained benzoxazine compound were evaluated. Tables 1 and 2 show the results.

### Comparative Example 1: F-a-type Benzoxazine

Benzoxazine F-a produced by Shikoku Chemicals Corporation was used.

### Comparative Example 2: Phenol Novolac-type Benzoxazine)

4 mol of a 37% formaldehyde aqueous solution was added to a 2 L four-necked flask equipped with a reflux condenser, a thermometer, a dropping funnel, and a stirrer, and 2 mol of aniline was slowly added dropwise with stirring while the flask was cooled to 10°C or lower in an ice bath. Subsequently, 2 mol of phenol novolac resin N1 was added, and the mixture was stirred and reacted for 6 hours under dioxane reflux conditions, followed by drying under reduced pressure, thereby obtaining a phenol novolac-type benzoxazine (N1-a).

### Comparative Example 3: Benzoxazine Derived from Lignin

Herbaceous lignin with an average particle size of about 40 µm was obtained from the waste liquid generated during a pulp production process using wheat straw as a raw material. Subsequently, the obtained herbaceous lignin, aniline, and paraformaldehyde were placed in a reaction vessel in a molar ratio of lignin:aniline:paraformaldehyde = 1:10:20. Thereafter, the reaction vessel was maintained at 100°C for 30 minutes to obtain a benzoxazine derived from herbaceous lignin.

The softening point, minimum melt viscosity, and solubility of the obtained benzoxazine compound derived from herbaceous lignin were evaluated. Tables 1 and 2 show the results.

### Preparation of Prepregs and Cured Products

### Example 3

The weight of an A4-sized sheet of paper (paper substrate: kraft paper for phenolic resins, thickness: about 0.23 mm) was measured to be 6.4 g. The same weight of the benzoxazine compound obtained in Example 1 as that of the sheet of paper was weighed out and dissolved in 30 ml of tetrahydrofuran. Thereafter, the sheet of paper was impregnated with the entire tetrahydrofuran solution and dried at 50°C for 24 hours to prepare a prepreg containing about 50% of the benzoxazine compound. The obtained prepreg was heated at 150°C for 4 hours and at 200°C for 2 hours while placing it between hot plates in an oven, thereby obtaining a cured product.

The heat resistance and mechanical properties of the obtained cured product were evaluated. Table 3 shows the results.

### Example 4

A prepreg containing about 50% of a benzoxazine and a cured product were obtained in the same manner as in Example 3, except that the benzoxazine compound obtained in Example 2 was used.

The heat resistance and mechanical properties of the obtained cured product were evaluated. Table 3 shows the results.

### Comparative Example 4

A prepreg and a cured product were obtained in the same manner as in Example 3, except that the conventional monomer-type benzoxazine compound (F-a-type benzoxazine) obtained in Comparative Example 1 was used in place of the benzoxazine compound obtained in Example 1.

The heat resistance and mechanical properties of the obtained cured product were evaluated. Table 3 shows the results.

### Comparative Example 5

A prepreg and a cured product were obtained in the same manner as in Example 3, except that the conventional phenol novolac-type benzoxazine compound (N1-a) obtained in Comparative Example 2 was used in place of the benzoxazine compound obtained in Example 1.

The heat resistance and mechanical properties of the obtained cured product were evaluated. Table 3 shows the results.

### Comparative Example 6

An attempt was made to prepare a prepreg in the same manner as in Example 3, except that the benzoxazine compound derived from herbaceous lignin (non-PEG chain) obtained in Comparative Example 3 was used in place of the benzoxazine compound obtained in Example 1; however, it was not possible to prepare a prepreg because the benzoxazine compound derived from herbaceous lignin could not be dissolved in tetrahydrofuran and other solvents.

**Table 1**

| Evaluation of softening point | | | |
|---|---|---|---|
| | Example 1 | Example 2 | Comparative Example 3 |
| | Benzoxazine derived from PEG 600-modified lignin | Benzoxazine derived from PEG 400-modified lignin | Benzoxazine derived from herbaceous lignin |
| Softening point | 115°C | 110°C | None |
| Minimum melt viscosity (Pa·s) | 250 | 350 | - *1 |

| | | | |
|---|---|---|---|
| *1: Not measurable because it does not melt. | | | |

**Table 2**

| Solubility test | | | |
|---|---|---|---|
| | Example 1 | Example 2 | Comparative Example 3 |
| | Benzoxazine derived from PEG 600-modified lignin | Benzoxazine derived from PEG 400-modified lignin | Benzoxazine derived from herbaceous lignin |
| Dimethyl sulfoxide | ○ | ○ | × |
| Dimethylacetamide | ○ | ○ | × |
| N-Methylpyrrolidone | ○ | ○ | × |
| Tetrahydrofuran | ○ | ○ | × |
| Chloroform | ○ | ○ | × |

**Table 3**

| Evaluation of prepreg and cured product | | | | |
|---|---|---|---|---|
| | Example 3 | Example 4 | Comparative Example 4 | Comparative Example 5 |
| | Cured product of benzoxazine derived from PEG 600-modified lignin (Example 1) | Cured product of benzoxazine derived from PEG 400-modified lignin (Example 2) | Cured product of F-a-type benzoxazine (Comparative Example 1) | Cured product of phenol novolac-type benzoxazine (Comparative Example 2) |
| DSC peak onset temperature | 110°C | 110°C | 150°C | 220°C |
| DSC peak temperature | 210°C | 210°C | 220°C | 250°C |
| Glass transition temperature | 242°C | 247°C | 165°C | 212°C |
| Tensile strength (MPa) | 35 | 35 | 27 | 21 |
| Tensile elastic modulus (GPa) | 4.8 | 5.1 | 5.6 | 5.5 |

Table 1 confirmed that the benzoxazine compounds of the present invention obtained in Examples 1 and 2 each have a softening point, that the softening point was low, and that their minimum melt viscosities were also low. Thus, these benzoxazine compounds can be applied to prepreg formation, casting processes, and the like. In contrast, the conventional benzoxazine compound of Comparative Example 3 (corresponding to the lignin-modified benzoxazine compound of PTL 2) does not have a softening point and therefore cannot be applied to prepreg formation, casting processes, and the like.

As shown in Table 2, the benzoxazine compounds of the present invention obtained in Examples 1 and 2 each have high solubility in the various solvents, whereas the benzoxazine compound of Comparative Example 3 was insoluble in any of the organic solvents.

Table 3 confirmed that the benzoxazine compounds of the present invention obtained in Examples 1 and 2 each have a lower DSC peak onset temperature and a lower DSC peak temperature than the monomer-type benzoxazine compound (F-a-type benzoxazine) of Comparative Example 1 and the phenol novolac-type benzoxazine compound (N1-a) of Comparative Example 2, indicating that the curing reaction starts and completes in a low-temperature range.

Table 3 confirmed that the cured products obtained in Examples 3 and 4 each have a significantly higher glass transition temperature and better heat resistance than the cured products obtained in Comparative Examples 4 and 5.

Table 3 confirmed that the cured products obtained in Examples 3 and 4 each have higher tensile strength and a lower tensile elastic modulus than the cured products obtained in Comparative Examples 4 and 5.

### Industrial Applicability

The benzoxazine compound of the present invention has high solubility in organic solvents and high melting properties. Furthermore, the cured product obtained by curing the resin composition comprising the benzoxazine compound of the present invention has excellent heat resistance (high glass transition temperature (Tg)), excellent strength (high tensile strength), and high stretchability (relatively low tensile elastic modulus). Thus, these are suitable for use in molded articles obtained by forming prepregs and the like.

## Claims

1. A benzoxazine compound comprising a reaction product of a novolac-type phenolic resin derived from lignin modified with polyethylene glycol, an amine compound, and an aldehyde compound.

2. The benzoxazine compound according to claim 1, wherein the novolac-type phenolic resin is a novolac-type phenolic resin obtained by reacting lignin modified with polyethylene glycol, a phenolic resin, and an aldehyde compound.

3. A resin composition comprising the benzoxazine compound of claim 1 or 2.

4. A cured product of the resin composition of claim 3.

5. A composite comprising the resin composition of claim 3 and a substrate.

6. A prepreg comprising the resin composition of claim 3 and a substrate.

7. A cured product of the composite of claim 5.

8. A method for producing a benzoxazine compound, comprising the steps of:
(1) reacting lignin modified with polyethylene glycol, a phenolic resin, and an aldehyde compound to obtain a novolac-type phenolic resin; and
(2) reacting the novolac-type phenolic resin obtained in step (1), an amine compound, and an aldehyde compound to obtain a benzoxazine compound.
